# EUROPEAN PATENT APPLICATION

(11) **EP 2 019 441 A1**
(43) Date of publication of application: **28.01.2009**
(21) Application number: 07741822.6
(22) Date of filing: 11.04.2007
(51) Int. Cl.: H01M 2/02, H01M 10/04, H01M 10/50

(54) **BATTERY PACK AND VEHICLE**

(30) Priority: 17.05.2006 JP 2006137917
(71) Applicant: Toyota Jidosha Kabushiki Kaisha, Toyota-shi, Aichi 471-8571 (JP)
(72) Inventor: NAKAMURA, Yoshiyuki, Toyota-shi, Aichi 471-8571 (JP)
(74) Representative: TBK-Patent
(86) International application number: PCT/JP2007/058386
(87) International publication number: WO 2007/132622

(57) **Abstract**

A casing (101) houses a bipolar secondary battery used for a power source of a vehicle or the like. The casing (101) includes two inner wall portions (103, 104) facing battery modules at opposite ends of the bipolar secondary battery (a plurality of battery modules). The casing (101) further includes two outer wall portions (105, 106) corresponding to the two inner wall portions (103, 104), respectively. In each of the two outer wall portions (105, 106), surface area of the central portion is larger than the surface area of an end portion. As the bipolar secondary battery is housed in the casing (101), a structure for binding and cooling the bipolar secondary battery can be simplified, and bias in temperature distribution of the bipolar secondary battery can be rectified.

## Description

### Technical Field

The present invention relates to a battery pack and a vehicle provided with the battery pack and, more specifically, to a battery pack including a bipolar secondary battery and a casing, as well as to a vehicle mounting the battery pack.

### Background Art

In connection with storage and cooling of a conventional secondary battery, Japanese Patent Laying-Open No. 2001-297740, for example, discloses a mount frame for a battery module aimed at secure binding of a plurality of battery modules and easy exchange of the battery modules, as well as a method of mounting battery modules. In the mount frame, a plurality of holes are formed to allow attachment/detachment of a plurality of battery modules as desired. Further, the mount frame includes a radiating fin or a coolant passage, as means for cooling the battery module.

Recently, as a large capacity power source for a hybrid vehicle, an electric vehicle or the like, a lithium secondary ion battery capable of attaining high energy density and high output density has been developed and used. When a lithium secondary ion battery is used in a hybrid vehicle or an electric vehicle, a plurality of unit batteries (battery cells) are connected in series to ensure high output.

When the batteries are connected by means of a connecting member, however, battery output lowers because of electric resistance of the connecting member. Further, as the ratio of the volume occupied by the connecting member to the volume of the battery as a whole increases, output density and energy density of the battery decrease.

A bipolar secondary battery is one of the batteries that can solve such a problem, and it allows reduction in resistance between battery cells as well as reduction in size. A bipolar secondary battery generally has a structure having a plurality of bipolar electrodes stacked one after another with an electrolyte interposed. Here, a bipolar electrode means an electrode having a collector member formed as a sheet, with positive electrode active material provided on one surface and negative electrode active material provided on the other surface, of the collector foil. The bipolar secondary battery may have various shapes, and as an example, it has a thin plate shape.

When the bipolar secondary battery is charged/discharged, a current flows in the direction of stacking of the bipolar electrodes. Consequently, Joule heat builds up in the bipolar secondary battery, and the temperature of bipolar secondary battery increases. If the bipolar secondary battery has a thin plate shape as mentioned above, heat conduction is smooth in the stacking direction of the bipolar electrodes, which leads to uniform temperature distribution. In the direction along a plane orthogonal to the stacking direction of the bipolar electrode (direction along the plate plane), however, temperature distribution tends to be biased.

A battery module housed in a mount frame disclosed in Japanese Patent Laying-Open No. 2001-297740 has a rectangular parallelepiped shape as described above. The type of secondary battery is not specified in Japanese Patent Laying-Open No. 2001-297740. Therefore, when the bipolar secondary battery is mounted on the mount frame described above to be charged/discharged, biased temperature distribution of the bipolar secondary battery in the direction parallel to the plane orthogonal to the stacking direction of bipolar electrodes would not be rectified (temperature distribution would not be made uniform).

### Disclosure of the Invention

An object of the present invention is to provide a battery pack capable of rectifying biased temperature distribution of the bipolar secondary battery as well as to provide a vehicle with such a battery pack.

In summary, the present invention provides a battery pack, provided with a battery assembly including a plurality of battery modules stacked together. Each of the plurality of battery modules has a positive electrode and a negative electrode stacked in the stacking direction of the plurality of battery modules, and an electrolyte arranged between the positive electrode and the negative electrode. The battery pack further includes a casing housing the battery assembly. The casing includes first and second inner wall portions facing battery modules that are at opposite ends of the plurality of battery modules, respectively, and first and second outer wall portions corresponding to the first and second inner wall portions, respectively. At least one outer wall portion of the first and second outer wall portions has surface area of a central portion larger than surface area of an end portion.

Preferably, at least one outer wall portion has a plurality of radiating fins arranged on a plane. A space between those two of the plurality of radiating fins which are arranged at the central portion is narrower than a space between those two radiating fins which are arranged at the end portion.

More preferably, an outer shape of each of the plurality of radiating fins is, at least partially, arc.

More preferably, an outer shape of each of the plurality of radiating fins is quadrilateral.

Preferably, at least one outer wall portion has a plurality of radiating fins positioned arranged on a plane. The height from the plane to the top of that one of the radiating fins which is arranged at the central portion is higher than height from the plane to the top of that one of the radiating fins which is arranged at the end portion.

More preferably, a space between those two of the plurality of radiating fins which are arranged at the central portion is narrower than a space between those two radiating fins which are arranged at the end portion.

More preferably, an outer shape of each of the plurality of radiating fins is, at least partially arc.

More preferably, an outer shape of each of the plurality of radiating fins is quadrilateral.

Preferably, the casing includes an upper case positioned above the battery assembly, and a lower case positioned below the battery assembly. The upper case and the lower case are integrated by a bolt.

Preferably, between adjacent two battery modules among the plurality of battery modules, a conductive member is provided. On a side of a first main surface of the conductive member, the positive electrode of one of the two battery modules is arranged. On a side of a second main surface of the conductive member, the negative electrode of the other of the two battery modules is arranged. The positive electrode is a positive electrode active material layer formed on the first main surface. The negative electrode is a negative electrode active material layer formed on the second main surface.

Preferably, the battery assembly is housed in the casing, in a state pressed in the stacking direction. Between the first inner wall portion and the battery assembly and between the second inner wall portion and the battery assembly, an insulator is provided.

According to another aspect, the present invention provides a vehicle, including a seat arranged in a vehicle interior, and a battery pack arranged below the seat. The battery pack includes a battery assembly having a plurality of battery modules stacked together. Each of the battery modules has a positive electrode and a negative electrode stacked in the stacking direction of the plurality of battery modules, and an electrolyte arranged between the positive electrode and the negative electrode. The battery pack further includes a casing housing the battery assembly. The casing includes first and second inner wall portions facing battery modules that are at opposite ends of the plurality of battery modules, respectively, and first and second outer wall portions corresponding to the first and second inner wall portions, respectively. At least one outer wall portion of the first and second outer wall portions has surface area of a central portion larger than surface area of an end portion.

Preferably, at least one outer wall portion has a plurality of radiating fins arranged on a plane. A space between those two of the plurality of radiating fins which are arranged at the central portion is narrower than a space between those two radiating fins which are arranged at the end portion.

More preferably, an outer shape of each of the plurality of radiating fins is, at least partially, arc.

More preferably, an outer shape of each of the plurality of radiating fins is quadrilateral.

Preferably, at least one outer wall portion has a plurality of radiating fins arranged on a plane. The height from the plane to the top of that one of the radiating fins which is arranged at the central portion is higher than height from the plane to the top of that one of the radiating fins which is arranged at the end portion.

More preferably, a space between those two of the plurality of radiating fins which are arranged at the central portion is narrower than a space between those two radiating fins which are arranged at the end portion.

More preferably, an outer shape of each of the plurality of radiating fins is, at least partially, arc.

More preferably, an outer shape of each of the plurality of radiating fins is quadrilateral.

Preferably, the casing includes an upper case positioned above the battery assembly, and a lower case positioned below the battery assembly. The upper case and the lower case are integrated by a bolt.

Preferably, between adjacent two battery modules among the plurality of battery modules, a conductive member is provided. On a side of a first main surface of the conductive member, the positive electrode of one of the two battery modules is arranged. On a side of a second main surface of the conductive member, the negative electrode of the other of the two battery modules is arranged. The positive electrode is a positive electrode active material layer formed on the first main surface. The negative electrode is a negative electrode active material layer formed on the second main surface.

Preferably, the battery assembly is housed in the casing, in a state pressed in the stacking direction. Between the first inner wall portion and the battery assembly and between the second inner wall portion and the battery assembly, an insulator is provided.

Therefore, according to the present invention, bias in temperature distribution of the bipolar secondary battery can be rectified.

### Brief Description of the Drawings

Fig. 1 is a schematic cross-sectional view showing an embodiment of the vehicle mounting the battery pack in accordance with the present invention.
Fig. 2 is a schematic transparent plan view of the vehicle shown in Fig. 1.
Fig. 3 shows in detail the battery pack 100A shown in Figs. 1 and 2.
Fig. 4 only shows a casing 101 of Fig. 3.
Fig. 5 is a cross-sectional view of battery pack 100A taken along the line V-V of Fig. 3.
Fig. 6 is a perspective view showing a structure of a battery pack in accordance with Embodiment 2.
Fig. 7 is a perspective view showing a structure of a battery pack in accordance with Embodiment 3.
Fig. 8 is a perspective view showing a structure of a battery pack 100D in accordance with Embodiment 4.
Fig. 9 is a right side view of battery pack 100D of Fig. 8.
Fig. 10 is a perspective view showing a structure of a battery pack in accordance with Embodiment 5.
Fig. 11 is a perspective view showing a structure of a battery pack in accordance with Embodiment 6.

### Best Modes for Carrying Out the Invention

In the following, embodiments of the present invention will be described in detail, with reference to the figures. Throughout the figures, the same or corresponding portions are denoted by the same reference characters.

### [Embodiment 1]

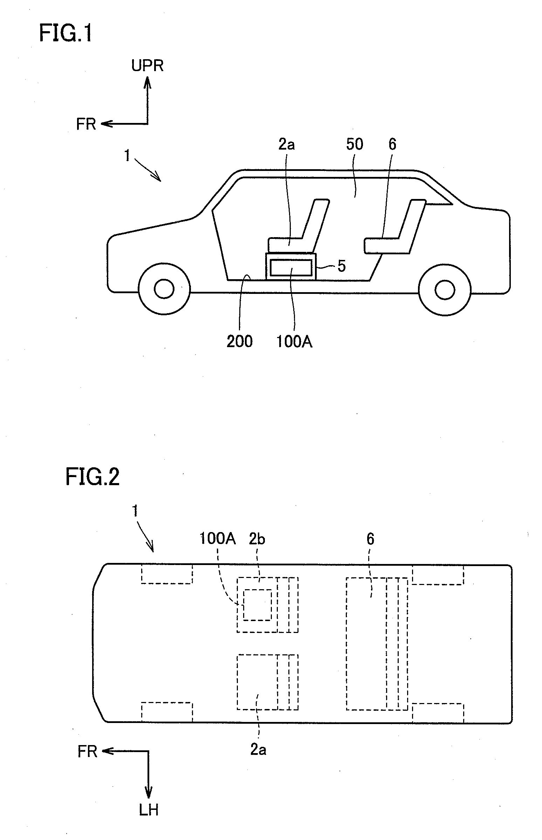

Fig. 1 is a schematic cross-sectional view showing an embodiment of the vehicle mounting the battery pack in accordance with the present invention.

Fig. 2 is a schematic transparent plan view of the vehicle shown in Fig. 1.

Referring to Figs. 1 and 2, a vehicle 1 is, for example, an electric vehicle using a dischargeable electric power supply as a power source, or a hybrid vehicle using an internal combustion engine such as a gasoline engine or a diesel engine and a dischargeable electric power supply as the power sources. Battery pack 100A is installed as a power source of such a vehicle.

In a passenger space (vehicle interior) 50 of vehicle 1, front seats 2a and 2b (see Fig. 2) and a rear seat 6 are arranged. In the passenger space 50, battery pack 100A is arranged below front seat 2a. Battery pack 100 is surrounded by a cover 5 arranged below front seats 2a and 2b and a floor 200. Front seats 2a and 2b correspond to the "seat" of the vehicle in accordance with the present invention.

Battery pack 100A may be arranged below front seat 2b. Further, a blower fan feeding cooling air to battery pack 100A may be arranged below front seat 2a (or below front seat 2b).

It is easier to make a space for housing battery pack 100A below front seats 2a and 2b, than at other portions of vehicle 1. In most cases, a vehicle body consists of a portion that collapses and a portion that does not collapse but protects an occupant or occupants at the time of a crash. Specifically, by arranging battery pack 100A below front seat 2a (or front seat 2b), it becomes possible to protect battery pack 100A against any shock, if the vehicle body is hard hit.

In Fig. 1, the direction represented by an arrow UPR is the direction to the ceiling of vehicle 1 (upward direction), and the direction represented by an arrow FR is the forward direction of vehicle 1 (direction of travel). In Fig. 2, the direction represented by an arrow LH is the direction to the left of the vehicle 1 (left side direction).

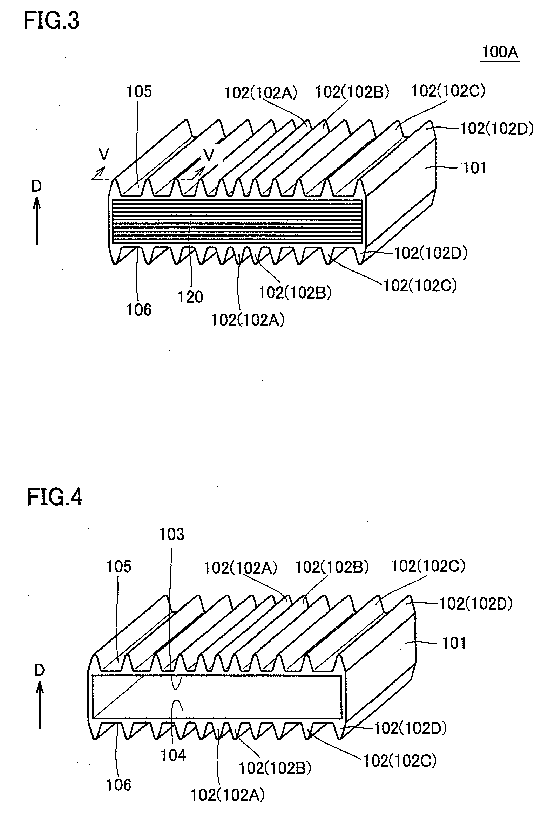

Fig. 3 shows in detail the battery pack 100A shown in Figs. 1 and 2.

Referring to Fig. 3, battery pack 100A includes a bipolar secondary battery 120 and a casing 101. Bipolar secondary battery 120 is a battery assembly including a plurality of battery modules (battery cells) stacked one after another. In Fig. 3, the direction of arrow D represents the stacking direction of the plurality of battery modules. Details of the structure of bipolar secondary battery 120 will be described later.

Fig. 4 only shows casing 101 of Fig. 3.

Referring to Figs. 3 and 4, casing 101 houses bipolar secondary battery 120 therein. Casing 101 includes inner wall portions 103 and 104. Inner wall portions 103 and 104 correspond to the "first and second inner wall portions" of the present invention, respectively. Inner wall portions 103 and 104 face battery modules at opposite ends of the plurality of battery modules, respectively. Inner wall portions 103 and 104 are substantially orthogonal to the stacking direction (direction of arrow D) of the plurality of battery modules.

Casing 101 further includes outer wall portions 105 and 106. Outer wall portions 105 and 106 correspond to inner wall portions 103 and 104, respectively. Specifically, outer wall portions 105 and 106 are substantially orthogonal to the stacking direction (direction of arrow D) of the plurality of battery modules. The outer wall portions 105 and 106 correspond to the "first and second outer wall portions" of the present invention, respectively.

Surface area at the central portion of outer wall portion 105 is larger than surface area at an end portion. Further, surface area at the central portion of outer wall portion 106 is larger than surface area at an end portion. Therefore, according to the present embodiment, a structure for binding and cooling bipolar secondary battery 120 can be simplified and bias in temperature distribution of bipolar secondary battery 120 can be rectified.

Casing 101 will be described in grater detail. A space between inner wall portions 103 and 104 is set to be smaller than thickness of bipolar secondary battery 120. Therefore, bipolar secondary battery 120 is housed in casing 101, pressed in the stacking direction of the plurality of battery modules. Further, in casing 101, bipolar secondary battery 120 is sandwiched between inner wall portions 103 and 104. Thus, bipolar secondary battery 120 can be bound and secured.

When bipolar secondary battery 120 is charged/discharged, electrons/ions move inside bipolar secondary battery 120. At the time of charging, bipolar secondary battery 120 expands in the direction of arrow D (the expanded secondary battery 120 returns to the original state at the time of discharge). Repeated charging/discharging leads to generation of a space between electrodes and variation in internal resistance, possibly degrading battery performance.

In the present embodiment, casing 101 serves as a binding member binding bipolar secondary battery 120. Therefore, variation in dimensional fluctuation experienced by the electrodes can be reduced, and degradation of battery performance can be prevented. Further, according to the present embodiment, it is possible to bind the battery without using any member such as a binding plate or a binding band.

Each of the outer wall portions 105 and 106 has a plurality of radiating fins 102 arranged on a plane. When viewed from a side of casing 101, radiating fin 102 has a quadrilateral outer shape, for example, rectangular or trapezoidal shape.

At each of the outer wall portions 105 and 106, a space between two radiating fins arranged at the central portion of the plane is narrower than the space between two radiating fins arranged at an end portion of the plane.

In the following, for each of the outer wall portions 105 and 106, the two radiating fins arranged near the central portion of the outer wall portion will be represented as radiating fins 102A and 102B, and two radiating fins arranged near the end portion of the outer wall portion will be represented as radiating fins 102C and 102D. At each of the outer wall portions 105 and 106, the space between radiating fins 102A and 102B is narrower than the space between radiating fins 102C and 102D.

As to the arrangement of the plurality of radiating fins other than radiating fins 102A to 102D, radiating fins are arranged such that the space between radiating fins becomes narrower nearer to the central portion of the outer wall.

In bipolar secondary battery 120 shown in Fig. 3, a current flows in the stacking direction of battery modules, at the time of charging/discharging. Bipolar secondary battery 120 has a rectangular parallelepiped shape. In the rectangular parallelepiped, the side along the stacking direction of the plurality of battery modules is shorter than the longer side and shorter side of the plane (rectangle) facing inner wall portion 103. In bipolar secondary battery 120 having such a shape, the plane orthogonal to the stacking direction of electrode sheets generates substantially the same quantity of heat per unit area.

The distance of heat conduction is short in the stacking direction (direction of arrow D) of battery modules and, therefore, smooth heat conduction takes place. Therefore, there is small bias in temperature distribution in the stacking direction of the bipolar electrodes. In a plane orthogonal to the stacking direction of electrode sheets, however, temperature distribution is biased. The reason for this is that heat more easily escapes from the end portion than at the central portion of the plane (heat tends to be kept in).

In the following, the central portion of outer wall portion 105 (106) will be also referred to as the "central portion of casing" and the end portion of outer wall portion 105 (106) will be also referred to as the "end portion of casing." In the present embodiment, the space between radiating fins 102 is denser near the center than at the end portion of casing 101. Thus, cooling performance at the central portion of casing 101 can be made higher than at the end portion of casing 101. Therefore, according to the present embodiment, bias in temperature distribution over the plane orthogonal to the stacking direction of electrode sheets can be rectified, in bipolar secondary battery 120.

Further, according to the present embodiment, as the space between radiating fins arranged at the central portion of casing 101 is made dense, surface stiffness can be improved, while reducing thickness of casing 101.

As described above, the temperature at the central portion of the plane orthogonal to the stacking direction of bipolar electrodes tends to increase in bipolar secondary battery 120 and, therefore, this portion particularly tends to expand. According to the present embodiment, surface stiffness of casing 101 is improved and, therefore, expansion of battery can be prevented.

Further, according to the present embodiment, inner wall portions 103 and 104 of casing 101 can be brought into tight contact with the surfaces of bipolar secondary battery 120 and, therefore, larger quantity of heat generated in bipolar secondary battery 120 is let out.

Though an external terminal for charging/discharging bipolar secondary battery 120 is not shown in Fig. 3, one of the positive electrode terminal and negative electrode terminal is provided on the front side and the other is provided on the deep side of Fig. 3.

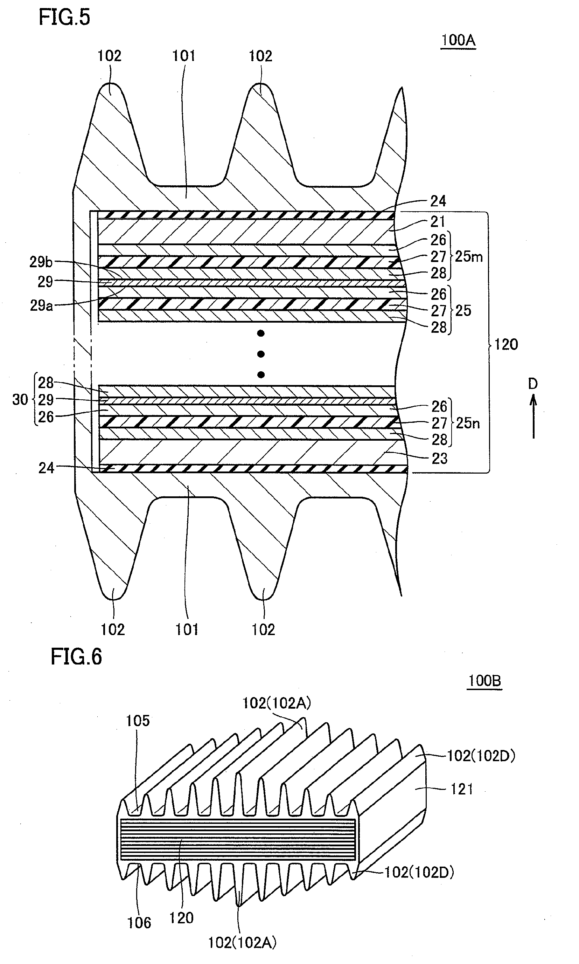

Fig. 5 is a cross-sectional view of battery pack 100A taken along the line V-V of Fig. 3.

Referring to Fig. 5, bipolar secondary battery 120 includes a plurality of electrode sheets 25 stacked in the direction of arrow D. The direction of arrow D shown in Fig. 5 is the same as the direction of arrow D shown in Figs. 3 and 4. Electrode sheet 25 corresponds to the "battery module" of the present invention.

Electrode sheet 25 consists of a positive electrode active material layer 28 serving as the positive electrode, a negative electrode active material layer 26 serving as the negative electrode, and an electrolyte layer 27 posed between positive electrode active material layer 28 and negative electrode active material layer 26. Electrolyte layer 27 is formed of a material having ion conductivity. Electrolyte layer 27 may be a solid electrolyte, or gelled electrolyte. By interposing electrolyte layer 27, smooth ion conduction between positive electrode active material layer 28 and negative electrode active material layer 26 becomes possible, improving output of bipolar secondary battery 120.

The plurality of electrode sheets 25 are stacked such that positive electrode active material layer 28 and negative electrode active material layer 26 oppose to each other at positions where the layers extend next to each other in the stacking direction. Between each of the plurality of electrode sheets 25, a sheet type collector foil 29 is provided. Positive electrode active material layer 28 is formed on one surface 29b and negative electrode active material layer 26 is formed on the other surface 29a, of collector foil 29. Positive electrode active material layer 28 and negative electrode active material layer 26 are formed, for example, by sputtering on the surfaces of collector foil 29.

A set of positive electrode active material layer 28, collector foil 29 and negative electrode active material layer 26 arranged between electrolyte layer 27 adjacent to each other in the stacking direction of electrode sheets 25 constitute a bipolar electrode 30. In bipolar secondary battery 120, both the positive electrode active material layer 28 serving as the positive electrode and the negative electrode active material layer 26 serving as the negative electrode are formed in one bipolar electrode 30. Collector foil 29 corresponds to the "conductive member" of the present invention.

As can be seen from electrode sheets 25m and 25 shown in Fig. 5, between two adjacent battery modules among the plurality of battery modules, a conductive member (collector foil 29) is provided. On the side of a first main surface of collector foil 29, a positive electrode (positive electrode active material layer 28) of one of the two battery modules (electrode sheet 25m) is arranged. On the side of the second main surface of collector foil 29, a negative electrode (negative electrode active material layer 26) of the other one of the two battery modules (electrode sheet 25) is arranged.

The plurality of electrode sheets 25 include an electrode sheet 25m positioned on the side closest to a negative electrode collector plate 21 and an electrode sheet 25n positioned on the side closest to a positive electrode collector plate 23. Electrode sheet 25m is provided such that negative electrode active material layer 26 is arranged at the end on the side of negative electrode collector plate 21. Electrode sheet 25n is provided such that positive electrode active material layer 28 is arranged at the end on the side of positive electrode collector plate 23. Thus, negative electrode collector plate 21 is in contact with negative electrode active material layer 26 of electrode sheet 25m, and positive electrode collector plate 23 is in contact with positive electrode active material layer 28 of electrode sheet 25n.

An insulating film 24 is stacked to be in contact with negative electrode collector plate 21, and insulating film 24 is stacked to be in contact with positive electrode collector plate 23. Specifically, insulating film 24 is provided between inner wall portion 103 and bipolar secondary battery 120 shown in Fig. 4 and between inner wall portion 104 and bipolar secondary battery 120 shown in Fig. 4. Insulating film 24 provided on the side of positive electrode collector plate 23 prevents short-circuit between positive electrode collector plate 23 and casing 101 when bipolar secondary battery 120 is housed in casing 101. Insulating film 24 provided on the side of negative electrode collector plate 21 prevents short-circuit between negative electrode collector plate 21 and casing 101 when bipolar secondary battery 120 is housed in casing 101.

In order to further increase charging/discharging capacity of the battery, a plurality of battery assemblies (a battery assembly corresponds to the bipolar secondary battery 120 shown in Fig. 5 with insulating film 24 removed) may be stacked in the direction of arrow D. In that case, the plurality of battery assemblies are formed such that negative electrode collector plates 21 are in contact with each other or positive electrode collector plates 23 are in contact with each other, in adjacent two battery assemblies among the plurality of battery assemblies. By arranging the plurality of battery assemblies in this manner, the battery assemblies come to be connected in parallel. As a result, charging/discharging capacity of the battery can be increased.

Next, materials forming the bipolar secondary battery 120 shown in Fig. 4 will be described in detail. Collector foil 29 is formed, for example, of aluminum. Here, even if the active material layer provided on the surface of collector foil 29 contains solid polymer electrolyte, it is possible to ensure sufficient mechanical strength of collector foil 29. Collector foil 29 may be formed by providing aluminum coating on metal other than aluminum such as copper, titanium, nickel, stainless steel (SUS) or an alloy of these metals.

Positive electrode active material layer 28 includes a positive electrode active material layer and a solid polymer electrolyte. Positive electrode active material layer 28 may contain a supporting salt (lithium salt) for improving ion conductivity, a conduction assistant for improving electron conductivity, NMP (N-methyl-2-pyrrolidone) as a solvent for adjusting slurry viscosity, AIBN (azobisisobutyronitrile) as a polymerization initiator or the like.

As the positive electrode active material, composite oxide of lithium and transition metal generally used in a lithium ion secondary battery may be used. Examples of the positive electrode active material may include Li/Co based composite oxide such as LiCoO₂, Li/Ni based composite oxide such as LiNiO₂, Li/Mn based composite oxide such as spinel LiMn₂O₄, and Li/Fe based composite material such as LiFeO₂. Other examples are phosphate compound or sulfate compound of transition metal and lithium such as LiFePO₄; sulfide or oxide of transition metal such as V₂O₅, MnO₂, TiS₂, MoS₂ and MoO₃; PbO₂, AgO, NiOOH and the like.

The solid polymer electrolyte is not specifically limited and it may be any ion-conducting polymer. For example, polyethylene oxide (PEO), polypropylene oxide (PPO) or copolymer of these may be available. Such a polyalkylene oxide based polymer easily dissolves lithium salt such as LiBF₄, LiPF₆, LiN(SO₂CF₃)₂, or LiN(SO₂C₂F₅)₂. The solid polymer electrolyte is included in at least one of positive electrode active material layer 28 and negative electrode active material layer 26. More preferably, the solid polymer electrolyte is included both in positive electrode active material layer 28 and negative electrode active material layer 26.

As the supporting salt, Li(C₂F₅SO₂)₂N, LiBF₄, LiPF₆, LiN(SO₂C₂F₅)₂ or a mixture of these may be used. As the electron conduction assistant, acetylene black, carbon black, graphite or the like may be used.

Negative electrode active material layer 26 includes a negative electrode active material layer and a solid polymer electrolyte. Negative electrode active material layer 26 may contain a supporting salt (lithium salt) for improving ion conductivity, a conduction assistant for improving electron conductivity, NMP (N-methyl-2-pyrrolidone) as a solvent for adjusting slurry viscosity, AIBN (azobisisobutyronitrile) as a polymerization initiator or the like.

As the negative electrode active material, a material generally used in a lithium ion secondary battery may be used. If a solid electrolyte is used, however, it is preferred to use a composite oxide of carbon or lithium and metal oxide or metal, as the negative electrode active material. More preferably, the negative electrode active material is formed of a composite oxide of carbon or lithium and transition metal. Further preferably, the transition metal is titanium. Specifically, it is more preferred that the negative electrode active material is of a composite oxide of titanium oxide and titanium and lithium.

As the solid electrolyte forming electrolyte layer 27, by way of example, a solid polymer electrolyte such as polyethylene oxide (PEO), polypropylene oxide (PPO) or copolymer of these may be used. The solid electrolyte contains supporting salt (lithium salt) for ensuring ion conductivity. As the supporting salt, LiBF₄, LiPF₆, LiN(SO₂CF₃)₂, LiN(SO₂C₂F₅)₂ or a mixture of these may be used.

Specific examples of materials for positive electrode active material layer 28, negative electrode active material layer 26 and electrolyte layer 27 are listed in Tables 1 to 3. Table 1 shows specific examples when electrolyte layer 27 is of an organic solid electrolyte, Table 2 shows specific examples when electrolyte layer 27 is of an inorganic solid electrolyte, and Table 3 shows specific examples when electrolyte layer 27 is of a gel electrolyte.

**Table 1**

| Positive Electrode Material | Negative Electrode Material | Solid Electrolyte | Remarks |
|---|---|---|---|
| LiMn₂O₄ | Li metal | P(EO/MEEGE) | ·electrolyte salt:LiBF₄ |
| - | Li metal | P(EO/PEG-22) | ·electrolyte salt:LiN(CF₃SO₂)₂(LiTFSI) |
| LiCoO₂ | carbon | PVdF base | - |
| LiCoO₂ | Li metal | ether based polymer P(EO/EM/AGE) | ·electrolyte salt:LiTFSI ·ion conducting material binder: mix P(EO/EM)+LiBF₄ to positive electrode |
| Li_{0.33}MnO₂ | Li metal | P(EO/EM/AGE) | · electrolyte salt:LiTFSI ·ion conducting material binder: mix PEO-based solid polymer+LiTFSI to positive electrode |
| Li_{0.33}MnO₂ | Li metal | PEO base+inorganic additive | ·electrolyte salt:LiCIO₄ ·ion conducting material: mix KB+PEG+LiTFSI to positive electrode |
| - | - | PEG-PMMA+PEG-borate ester | ·electrolyte salt:LiTFSI, BGBLi |
| - | - | PEO base +10mass%0.6Li₂S+0.4SiS₂ | ·electrolyte salt:LiCF₃SO₃ |
| - | Li metal | PEO base+ perovskite type La_{0.55}Li_{0.33}TiO₃ | ·electrolyte salt:LiCF₃SO₃ |
| Li metal | - | styrene/ethylene oxide-block-graft polymer(PSEO) | ·electrolyte salt:LiTFSI ·ion conducting material: mix KB+PVdF+PEG+LiTFSI to positive electrode |
| LiCoO₂ | Li metal | P(DMS/EO)+polyether cross link | - |
| Li_{0.33}MnO₂ | Li metal | prepolymer composition mainly consisting of urethane prepolymer acrylate (PUA) of urethane | ·electrolyte salt:LiTFSI ·ion conducting material: mix KB+PVdF+PEG+LiTFSI to positive electrode |
| - | - | multibranched graft polymer (MMA+CMA+POEM) | ·electrolyte saltLiClO₄ |
| LiNi_{0.8}Co_{0.2}O₂ | Li metal | PEO/multibranched polymer/filler based composite solid electrolyte (PEO+HBP+BaTiO₃) | ·electrolyte salt:LiTFSI ·mix SPE+AB to positive electrode |
| - | - | PME400+Group 13 metal alkoxide (as Lewis acid) | ·electrolyte salt:LiCl |
| - | - | matrix containing poly (N-methylvinylimidazoline) (PNMVI) | ·electrolyte salt:LiClO₄ |
| LiCoO₂ | Li metal | polymerize methoxy polyethylene glycol monomethyl meso acrylate using ruthenium complex by living radical polymerization, further polymerize with styrene | ·electrolyte salt:LiClO₄ ·positive electrode conducting material KB⁺ binder PVdF |
| LiCoO₂ | Li metal | P(EO/EM)+ether based plasticizer P(EO/EM)+ether based plasticizer | ·electrolyte salt:LiTFSI ·positive electrode conducting material KB+ binder PVdF |

**Table 2**

| Positive electrode material | Negative electrode material | Solid Electrolyte | Remarks |
|---|---|---|---|
| LiCoO₂ | In | 95(0,6Li₂S·0.4SiS₂)·5Li₄SiO₄ (Li₂S-SiS₂ based melt rapid cooled glass) | ·state:glass |
| - | - | 70Li₂S·30P₂S₅Li_{1.4}P_{0.6}S_{2.2}sulfide glass (Li₂S-P₂S₅ based glass ceramics) | ·state:glass ·forming method:mechanochemical |
| - | - | Li_{0.35}La_{0.55}TiO₃(LLT) (perovskite type structure) | ·state:ceramics ·form solid electrolyte porous body, fill pores with active material sol |
| - | - | 80Li₂S·20P₂S₅ (Li₂S-P₂S₅ based glass ceramics) | ·state:glass ·forming method:mechanochemical |
| - | - | xSrTiO₃·(1-x)LiTaO₃ (perovskite type oxide) | ·state:ceramics |
| LiCoO₂ | Li-In metal | Li_{3.4}Si_{0.4}P_{0.6}S₄ (thio-LISICON Li ion conductor) | ·state:ceramics |
| - | - | (Li_{0.1}La_{0.3})ₓZr_{y}Nb_{1-y}O₃ (perovskite type oxide) | ·state:ceramics |
| - | - | Li₄B₇O₁₂Cl | ·state:ceramics ·combing PEG as organic compound |
| - | - | Li₄GeS₄-Li₃PS₄ based crystal Li_{3.25}Ge_{0.25}P_{0.75}S₄ (thio-LISICON Li ion conductor) | ·state:ceramics |
| - | Li metal In metal | 0.01 Li₃PO₄-0.63Li₂S-0.36SiS₂ (thio-LISICON Li ion conductor) | ·state:ceramics |
| LiCoO₂LiFePO₄ LiMn_{0.6}Fe_{0.4}PO₄ | Li metal V₂O₅ | Li₃PO₄₋ₓNₓ(LIPON) (lithium phosphate oxynitride glass) | ·state:glass |
| LiNi_{0.8}Co_{0.15} Al_{0.05}O₂ | Li metal | Li₃InBr₃Cl₃ (rock salt type Li ion conductor) | ·state:ceramics |
| - | - | 70Li₂S·(30-x)P₂S₅·xP₂O₅ (Li₂S-P₂S₅-P₂O₅ based glass ceramics) | ·state:glass |
| LiCoO_{2 etc.} | Li metal Sn based oxide | Li₂O-B₂O₃-P₂O₅ base, Li₂O-V₂O₅-SiO₂ base.Li₂O-TiO₂-P₂O₅ base, LVSO etc. | ·state:glas |
| - | - | LiTi₂(PO₃)₄(LTP) (NASICON type structure) | ·state:ceramics |

**Table 3**

| Positive electrode material | Negative electrode material | Polymer base | Remarks |
|---|---|---|---|
| Ni based collector | Li metal | acrylonitrile vinyl acetate (PAN-VAc based gel electrolyte) | ·solvent:EC+PC ·electrolyte salt:LiBF_{4,} LiPF₆, LiN(CF₃SO₂)₂ |
| lithium electrode | lithium electrode | triethylene glycolmethyl methacrylate (polymethyl methacrylate[(PMMA) based gel electrolyte) | ·solvent:EC+PC ·electrolyte salt:LiBF₄ |
| V₂O₅/PPy composite body | Li metal | methyl methacrylate (PMMA gel electrolyte) | ·solvent:EC+DEC ·electrolyte salt:LiClO₄ |
| Li metal | Li metal | PEO/PS polymer blend gel electrolyte | ·solvent:EC+PC ·electrolyte salt:LiClO₄ |
| Li metal | Li metal | alkylene oxide based polymer electrolyte | ·solvent:PC ·electrolyte salt:LiClO₄ |
| Li metal & LiCoO₂ | Li metal | alkylene oxide based polymer electrolyte | ·solvent:EC+GBL ·electrolyte salt:LiBF₄ |
| Li metal | Li metal | polyolefin based base polymer | ·solventEC+PC ·electrolyte salt:LiBF₄ |
| Li_{0.36}CoO₂ | Li metal | polyvinylidenefluoride (PVdF) + propylene hexafluoride (HFP) (PVdF-HFP gel electrolyte) | ·solvent:EC+DMC ·electrolyte salt:LiN(CF₃SO₂)₂ |
| LiCoO₂ | Li metal | PEO based and acryl based polymer | ·solvent:EC+PC ·electrolyte salt:LiBF₄ |
| Li metal | Li metal | trimethylol propane ethoxylate acrylate (ether based polymer) | ·solvent:PC ·electrolyte salt:LiBETI, LiBF₄, LiPF₆ |
| - | - | EO-PO copolymer | ·electrolyte salt:LiTFSI, LiBF₄, LiPF₆ |
| - | - | poly aziridine compound | ·solvent:EC+DEC ·electrolyte salt:LIPF₆ |
| - | PAS (polyacene) | PVdF-HFP gel electrolyte | ·solvent:PC, EC+DEC ·electrolyte salt:LiClO₄, Li(C₂F₅SO₂)₂N |
| - | - | urea based lithium polymer gel electrolyte | ·solvent: EC+DMC ·electrolyte salt:LiPF₆ |
| - | - | polyether/polyurethane based (PEO-NCO) gel electrolyte | ·solvent:PC ·electrolyte salt:LiClO₄ |
| - | - | cross-linked polyalkylene oxide based gel polymer electrolyte | - |

As described above, according to Embodiment 1, the structure for cooling and binding a bipolar secondary battery can be simplified and bias in temperature distribution of bipolar secondary battery can be rectified.

### [Embodiment 2]

Fig. 6 is a perspective view showing a structure of a battery pack in accordance with Embodiment 2.

Referring to Figs. 6 and 3, a battery pack 100B is different from battery pack 100A in that it includes a casing 121 in place of casing 101. Other portions of battery pack 100B are the same as the corresponding portions of battery pack 100A and, therefore, description thereof will not be repeated.

Each of outer wall portions 105 and 106 has a plurality of radiating fins 102 arranged on a plane. At the central portion of outer wall portion, radiating fin 102A is arranged, and at the end portion of outer wall portion, radiating fin 102D is arranged. Height from the plane to the top of radiating fin 102A is higher than the height from the plane to the top of radiating fin 102D. As to radiating fins other than radiating fins 102A and 102D, height of the fins becomes higher nearer to the central portion of the outer wall portion, as in the case of radiating fins 102A and 102D.

Other portions of casing 121 are the same as the corresponding portions of casing 101 and, therefore, description thereof will not be repeated.

As in casing 101, in casing 121, the surface area at the central portion of each of outer wall portions 105 and 106 is larger than the surface area at the end portion. Therefore, similar to Embodiment 1, according to Embodiment 2 also, the structure for cooling and binding a bipolar secondary battery can be simplified and bias in temperature distribution of bipolar secondary battery can be rectified.

### [Embodiment 3]

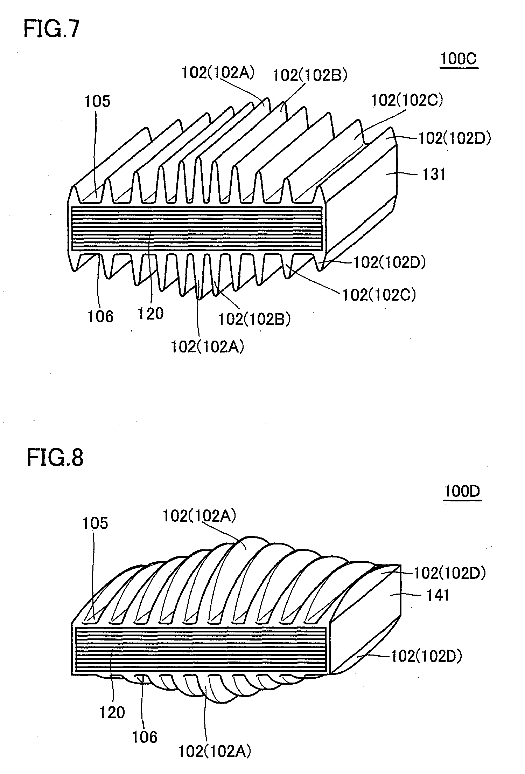

Fig. 7 is a perspective view showing a structure of a battery pack in accordance with Embodiment 3.

Referring to Figs. 7 and 6, a battery pack 100C is different from battery pack 100B in that it includes a casing 131 in place of casing 121. Other portions of battery pack 100C are the same as the corresponding portions of battery pack 100B and, therefore, description thereof will not be repeated.

Casings 131 and 121 are different in the space of the plurality of radiating fins 102. In casing 131, the space between radiating fins 102A and 102B is narrower than the space between radiating fins 102C and 102D. In contrast, in casing 121, the spaces between the plurality of radiating fins 102 are the same with each other.

Height from the plane to the top of radiating fin 102A arranged at the central portion of outer wall portion 105 (106) is higher than the height from the plane to the top of radiating fin 102D arranged at the end portion of the outer wall portion. Other portions of casing 131 are the same as the corresponding portions of casing 121 and, therefore, description thereof will not be repeated.

As in casings 101 and 121, in casing 131, the surface area at the central portion of each of outer wall portions 105 and 106 is larger than the surface area at the end portion. Therefore, similar to Embodiments 1 and 2, according to Embodiment 3 also, the structure for cooling and binding a bipolar secondary battery can be simplified and bias in temperature distribution of bipolar secondary battery can be rectified.

### [Embodiment 4]

Fig. 8 is a perspective view showing a structure of a battery pack 100D in accordance with Embodiment 4.

Referring to Figs. 8 and 6, a battery pack 100D is different from battery pack 100B in that it includes a casing 141 in place of casing 121. Other portions of battery pack 100D are the same as the corresponding portions of battery pack 100B and, therefore, description thereof will not be repeated. Casings 141 and 121 are different in the shape of the plurality of radiating fins 102.

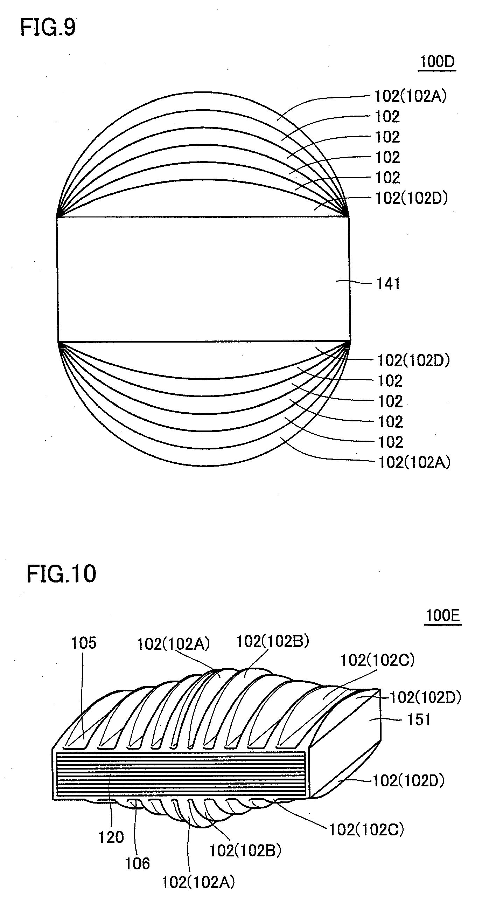

Fig. 9 is a right side view of battery pack 100D of Fig. 8.

Referring to Figs. 9 and 8, the outer shape of the plurality of radiating fins 102 is, at least partially, arc (at the outermost portion of casing 101). On the contrary, each of the plurality of radiating fins 102 of casing 101 shown in Fig. 3 and of casing 121 shown in Fig. 6 has rectangular outer shape. The spaces between the plurality of radiating fins 102 are the same with each other.

Other portions of casing 141 are the same as the corresponding portions of casing 121 and, therefore, description thereof will not be repeated. Specifically, at the outer wall portion, radiating fin 102A is higher than radiating fin 102D.

As in casings 101, 121 and 131, in casing 141, the surface area at the central portion of each of outer wall portions 105 and 106 is larger than the surface area at the end portion. Therefore, similar to Embodiments 1 to 3, according to Embodiment 4 also, the structure for cooling and binding a bipolar secondary battery can be simplified and bias in temperature distribution of bipolar secondary battery can be rectified.

### [Embodiment 5]

Fig. 10 is a perspective view showing a structure of a battery pack in accordance with Embodiment 5.

Referring to Figs. 10 and 8, a battery pack 100E is different from battery pack 100D in that it includes a casing 151 in place of casing 141. Other portions of battery pack 100E are the same as the corresponding portions of battery pack 100C and, therefore, description thereof will not be repeated.

Casings 151 and 141 are different in the space of radiating fins 102. In casing 151, the space between radiating fins 102A and 102B is narrower than the space between radiating fins 102C and 102D. On the contrary, in casing 141, the spaces between the plurality of radiating fins are the same with each other.

At each of outer wall portions 105 and 106, that is, at the outer wall portion, radiating fin 102A is higher than radiating fin 102D. Other portions of casing 151 are the same as the corresponding portions of casing 141 and, therefore, description thereof will not be repeated.

As in casings 101, 121, 131 and 141, in casing 151, the surface area at the central portion of each of outer wall portions 105 and 106 is larger than the surface area at the end portion. Therefore, similar to Embodiments 1 to 4, according to Embodiment 5 also, the structure for cooling and binding a bipolar secondary battery can be simplified and bias in temperature distribution of bipolar secondary battery can be rectified.

### [Embodiment 6]

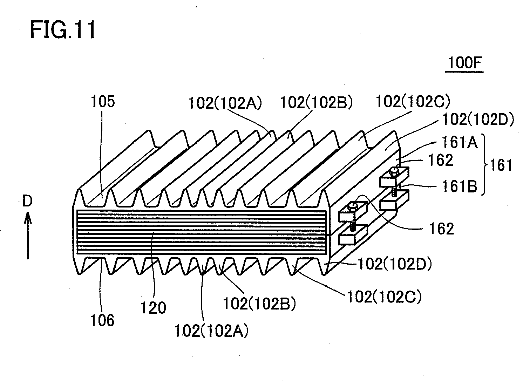

Fig. 11 is a perspective view showing a structure of a battery pack in accordance with Embodiment 6.

Referring to Figs. 11 and 3, a battery pack 100F is different from battery pack 100A in that it includes a casing 161 in place of casing 101. Other portions of battery pack 100F are the same as the corresponding portions of battery pack 100A and, therefore, description thereof will not be repeated.

Casing 161 includes an upper case 161A arranged above bipolar secondary battery 120, and a lower case 161B arranged below bipolar secondary battery 120. In short, casing 161 is formed separable into two in the vertical direction (direction of arrow D). Upper case 161A and lower case 161B are integrated by a bolt 162.

When casing 161 is formed as a single piece, there is possibly a positional error in the portion housing bipolar secondary battery 120 (that is, space between inner wall portions 103 and 104 shown in Fig. 4). In that case, the effect of binding secondary battery 120 would be decreased, and the effect of heat radiation from bipolar secondary battery would also be decreased. According to the structure of battery pack in accordance with Embodiment 6, it becomes possible to apply optimal pressure to bipolar secondary battery 120. Thus, according to Embodiment 6, appropriate cooling and binding of bipolar secondary battery 120 are possible.

Casings (casings 121, 131, 141, 151) of each of the battery packs according to Embodiments 2 to 5 may also be formed of an upper case and a lower case, similar to casing 161.

Further, each of battery packs 100B to 100F is arranged, for example, in vehicle 1 shown in Figs. 1 and 2, as is battery pack 100A.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

## Claims

1. A battery pack, comprising:
a battery assembly including a plurality of battery modules stacked together, each having
a positive electrode and a negative electrode stacked in the stacking direction of said plurality of battery modules, and
an electrolyte arranged between said positive electrode and said negative electrode; and
a casing housing said battery assembly, said casing including
first and second inner wall portions facing battery modules that are at opposite ends of said plurality of battery modules, respectively, and
first and second outer wall portions corresponding to said first and second inner wall portions, respectively; wherein
at least one outer wall portion of said first and second outer wall portions has surface area of a central portion larger than surface area of an end portion.

2. The battery pack according to claim 1, wherein
said at least one outer wall portion has
a plurality of radiating fins arranged on a plane; and
a space between those two of said plurality of radiating fins which are arranged
at said central portion is narrower than a space between those two radiating fins which are arranged at said end portion.

3. The battery pack according to claim 2, wherein
an outer shape of each of said plurality of radiating fins is, at least partially, arc.

4. The battery pack according to claim 2, wherein
an outer shape of each of said plurality of radiating fins is quadrilateral.

5. The battery pack according to claim 1, wherein
said at least one outer wall portion has
a plurality of radiating fins positioned arranged on a plane; and
height from said plane to the top of that one of said radiating fins which is arranged at said central portion is higher than height from said plane to the top of that one of said radiating fins which is arranged at said end portion.

6. The battery pack according to claim 5, wherein
a space between those two of said plurality of radiating fins which are arranged at said central portion is narrower than a space between those two radiating fins which are arranged at said end portion.

7. The battery pack according to claim 5, wherein
an outer shape of each of said plurality of radiating fins is, at least partially, arc.

8. The battery pack according to claim 5, wherein
an outer shape of each of said plurality of radiating fins is quadrilateral.

9. The battery pack according to claim 1, wherein
said casing includes
an upper case positioned above said battery assembly, and
a lower case positioned below said battery assembly; and
said upper case and said lower case are integrated by a bolt.

10. The battery pack according to claim 1, wherein
between adjacent two battery modules among said plurality of battery modules, a
conductive member is provided;
on a side of a first main surface of said conductive member, said positive electrode of one of said two battery modules is arranged;
on a side of a second main surface of said conductive member, said negative electrode of the other of said two battery modules is arranged;
said positive electrode is a positive electrode active material layer formed on said first main surface; and
said negative electrode is a negative electrode active material layer formed on said second main surface.

11. The battery pack according to claim 1, wherein
said battery assembly is housed in said casing, in a state pressed in said stacking direction; and
between said first inner wall portion and said battery assembly and between said second inner wall portion and said battery assembly, an insulator is provided.

12. A vehicle, comprising:
a seat arranged in a vehicle interior; and
a battery pack arranged below said seat including
a battery assembly having a plurality of battery modules stacked together each having
a positive electrode and a negative electrode stacked in the stacking direction of said plurality of battery modules, and
an electrolyte arranged between said positive electrode and said negative electrode;
said battery pack further including
a casing housing said battery assembly, said casing includes
first and second inner wall portions facing battery modules that are at opposite ends of said plurality of battery modules, respectively, and
first and second outer wall portions corresponding to said first and second inner wall portions, respectively; wherein
at least one outer wall portion of said first and second outer wall portions has surface area of a central portion larger than surface area of an end portion.

13. The vehicle according to claim 12, wherein
said at least one outer wall portion has
a plurality of radiating fins arranged on a plane; and
a space between those two of said plurality of radiating fins which are arranged at said central portion is narrower than a space between those two radiating fins which are arranged at said end portion.

14. The vehicle according to claim 13, wherein
an outer shape of each of said plurality of radiating fins is, at least partially, arc.

15. The vehicle according to claim 13, wherein
an outer shape of each of said plurality of radiating fins is quadrilateral.

16. The vehicle according to claim 12, wherein
said at least one outer wall portion has
a plurality of radiating fins positioned arranged on a plane; and
height from said plane to the top of that one of said radiating fins which is
arranged at said central portion is higher than height from said plane to the top of that one of said radiating fins which is arranged at said end portion.

17. The vehicle according to claim 16, wherein
a space between those two of said plurality of radiating fins which are arranged at said central portion is narrower than a space between those two radiating fins which are arranged at said end portion.

18. The vehicle according to claim 16, wherein
an outer shape of each of said plurality of radiating fins is, at least partially, arc.

19. The vehicle according to claim 16, wherein
an outer shape of each of said plurality of radiating fins is quadrilateral.

20. The vehicle according to claim 12, wherein
said casing includes
an upper case positioned above said battery assembly, and
a lower case positioned below said battery assembly; and
said upper case and said lower case are integrated by a bolt.

21. The vehicle according to claim 12, wherein
between adjacent two battery modules among said plurality of battery modules, a conductive member is provided;
on a side of a first main surface of said conductive member, said positive electrode of one of said two battery modules is arranged;
on a side of a second main surface of said conductive member, said negative electrode of the other of said two battery modules is arranged;
said positive electrode is a positive electrode active material layer formed on said first main surface; and
said negative electrode is a negative electrode active material layer formed on said second main surface.

22. The vehicle according to claim 12, wherein
said battery assembly is housed in said casing, in a state pressed in said stacking direction; and
between said first inner wall portion and said battery assembly and between said second inner wall portion and said battery assembly, an insulator is provided.
